# EUROPÄISCHE PATENTSCHRIFT

(11) **EP 0 580 039 B1**
(45) Veröffentlichungstag und Bekanntmachung des Hinweises auf die Patenterteilung: **14.02.1996**
(21) Anmeldenummer: 93111004.3
(22) Anmeldetag: 09.07.1993
(51) Int. Cl.: F02F 1/42, F02F 1/24

(54) **Brennkraftmaschine mit Hubkolben und innerer Verbrennung, insbesondere Dieselmotor**
Piston internal combustion engine, in particular diesel engine
Moteur à combustion interne à pistons, en particulier moteur diesel

(30) Priorität: 24.07.1992 DE 4224494
(43) Veröffentlichungstag der Anmeldung: 26.01.1994
(73) Patentinhaber: ADAM OPEL AG, D-65423 Rüsselsheim (DE)
(72) Erfinder: Breidenbach, Paul, Dipl.-Ing., D-55234 Bechenheim (DE)
(74) Vertreter: Kümpfel, Heinz, Dipl.-Ing.

(56) Entgegenhaltungen:
- EP-A- 0 117 850
- US-A- 1 977 127
- PATENT ABSTRACTS OF JAPAN vol. 11, no. 57 (M-564)(2504) 21. Februar 1987 & JP-A-61 218 717 (MAZDA MOTOR CORP.) 29. September 1986
- AUTOMOTIVE ENGINEERING Bd. 95, Nr. 3, 1987, WARRENDALE, PA, USA Seiten 89 - 92, DAVID SCOTT 'X-4 VALVING PERMITS TWIN TURBOS ON IN-LINE ENGINE'

## Beschreibung

Die Erfindung betrifft eine Brennkraftmaschine mit Hubkolben und innerer Verbrennung, insbesondere einen Dieselmotor, mit zwei um 180° bezogen auf die Achse der Zylinder versetzten Einlaßventilen je Zylinder, deren zugeordnete Einlaßkanäle innerhalb des Zylinderkopfes von jeweils einem von zwei beidseits des Zylinderkopfes angeordneten Ansaugkanälen zu den Ventilöffnungen der die Einlaßkanäle steuernden Einlaßventile führen und mit zumindest einem jeweils zwischen zwei benachbarten Einlaßventilen angeordneten Auslaßventil.

Bei Brennkraftmaschinen mit innerer Gemischbildung ist in vielen Fällen zur Gemischbildung und zum optimalen Ablauf des Verbrennungsvorganges eine Rotation der Verbrennungsluft im Zylinder von Vorteil. Die Rotation der Verbrennungsluft im Zylinder kann in an sich bekannter Weise entweder mittels schneckenförmig um das Ventil ausgebildeter Einlaßkanäle, sogenannter Drallkanäle, oder mittels schräg zum Ventil und tangential zum Zylinder verlaufender Einlaßkanäle erreicht werden. Bei Zylinderköpfen mit zwei Einlaßventilen je Zylinder besteht dabei die Möglichkeit, je nach den konstruktiven Gegebenheiten entweder zwei Drallkanäle oder je einen Drall- und einen Schrägkanal oder aber zwei Schrägkanäle miteinander zu kombinieren, wobei sich hinsichtlich der einströmenden Luftmenge und des erzielten Dralls im Zylinder unterschiedliche Effekte ergeben.

So ist beispielsweise aus der DE-PS 12 11 438 eine Mehrventil-Brennkraftmaschine bekannt, bei der zwei Einlaßventile von je einem Einlaßkanal versorgt werden. Dabei ist der eine Einlaßkanal als Umkehrkanal ausgebildet, der etwa tangential zur Zylinderwand in den Brennraum mündet. Der zweite Kanal ist als Spiralkanal ausgeführt. Damit kann zwar eine Füllung mit Turbulenz erzeugt werden, aber es treten auch erhebliche Strömungs- und damit Füllungsverluste ein.

Eine vierventilige Brennkraftmaschine mit zwei Schrägkanälen für den Gaseinlaß ist mit SU-PS 14 30 573 beschrieben. Bei dieser Brennkraftmaschine sind die Einlaßventile um 90°, bezogen auf die Zylinderachse, zueinander versetzt. Damit läuft der nachgeordnete Gasstrom auf den voraufliegenden auf und wird zur Zylindermitte abgelenkt. Die dem Einlaßgasstrom innewohnende kinetische Energie wird nur in geringem Maße zur Verwirbelung der Ladung herangezogen.

Mit der den Oberbegriff des Anspruchs 1 bildenden US-PS 1 977 127 wird eine Brennkraftmaschine beschrieben, bei welcher zwei um 180° bezogen auf die Zylinderachse versetzte Einlaßventile und ein zwischen diesen befindliches Auslaßventil je Zylinder vorgesehen sind. Die zu den Einlaßventilen führenden Einlaßkanäle verlaufen innerhalb des Zylinderkopfes tangential zur Zylinderwand. Dabei erfolgt die Zuströmeinrichtung zu den Einlaßventilen annähernd in einer senkrecht zur Zylinderachse verlaufenden Ebene, d. h. die Ansaugströme müssen unmittelbar an den Ventilen in eine Richtung parallel zur Zylinderachse umgelenkt werden. Durch die zylinderwandnahe Mündung der Einlaßkanäle entsteht eine verstärkte Rotation der Ladung, die zur Entmischung der Ladung führen kann. Durch die Umlenkung der Ansaugströme unmittelbar an den Ventilen tritt eine Drosselwirkung ein, die zu erheblichen Füllungsverlusten führt.

Weiterhin ist aus dem DE-GM 17 87 801 eine Vierventil-Brennkraftmaschine bekannt, bei der die beiden Einlaßventile jeweils von einem eigenen Ansaugkanal versorgt werden. Einer der beiden Einlaßkanäle ist als Schrägkanal, der zweite als Spiralkanal ausgebildet. Das zum Schrägkanal gehörige Einlaßventil ist um einen Winkel von etwa 90° hinter dem zum Spiralkanal gehörigen Einlaßventil, bezogen auf den Drehsinn der erzeugten Luftrotation im Zylinder, angeordnet. Damit kommt es zwar zu keiner Störung der Luftrotation um die Zylinderachse, praktisch wird jedoch kaum Turbulenz erreicht, die für eine schnelle Durchbrennung des Gemisches Voraussetzung ist.

Der Erfindung liegt somit die Aufgabe zugrunde, bei einer Brennkraftmaschine der eingangs genannten Art Maßnahmen zu treffen, die einen optimalen Füllungsgrad des Zylinderraumes sichern, dabei die Ladung in eine intensive Rotation um die Zylinderachse versetzen und gleichzeitig einen hohen Grad von Turbulenz erzeugen.

Erfindungsgemäß wird diese Aufgabe dadurch gelöst, daß beide Einlaßkanäle im Verlauf zwischen Ansaugkanal und Ventilöffnung der Einlaßventile als in Projektion auf eine parallel zur Zylindermittenachse liegenden Fläche geradlinig verlaufende gleich lange Schrägkanäle ausgeführt sind, die in Projektion auf den Zylinderquerschnitt jeweils mit ihrer Mittellinie senkrecht auf die Mitte von in einer geraden Linie angeordneten Zylinderradien und mit etwa 45° Neigung in Tangentenrichtung auf die Trennebene zwischen Zylinderkopf und Zylinderblock gerichtet sind.

Durch diese Maßnahmen strömt die Luft mit geringstem Widerstand in den Zylinder ein, so daß ein optimaler Füllungsgrad erzielt wird. Drosselwirkungen treten in den etwa gleich langen Schrägkanälen kaum auf. Die im Zylinder um 180° versetzt in tangentialer Richtung eintretenden Gasströme versetzen die Ladung in eine intensive Rotation. Die beiden Gasströme laufen jedoch im Zentrum des Zylinderraumes gegeneinander und erzeugen so an ihren inneren Randbereichen intensive Wirbel, welche der Gasrotation überlagert sind und im Ergebnis zu einer optimalen Turbulenz führen.

In besonders vorteilhafter Weise können die als Schrägkanäle ausgeführten Einlaßkanäle sowie die vorgelagerten Ansaugkanäle mit dem Zylinderkopf einstückig hergestellt sein.

Einer der Ansaugkanäle kann auch, z. B. mittels einer Klappe oder dergleichen, absperrbar gestaltet sein, so daß z. B. im Teillastbereich die Zylinderfüllung nur durch ein Einlaßventil erfolgt.

Vorzugsweise wird eine erfindungsgemäße Brennkraftmaschine mit zwei Auslaßventilen ausgerüstet sein, welche jeweils zwischen zwei Einlaßventilen angeordnet sind.

Bei einer durch Turbolader aufgeladenen Brennkraftmaschine kann der Turbolader zylinderkopfnah angeordnet und in das Kühl- und Schmiersystem des Zylinderkopfes integriert sein.

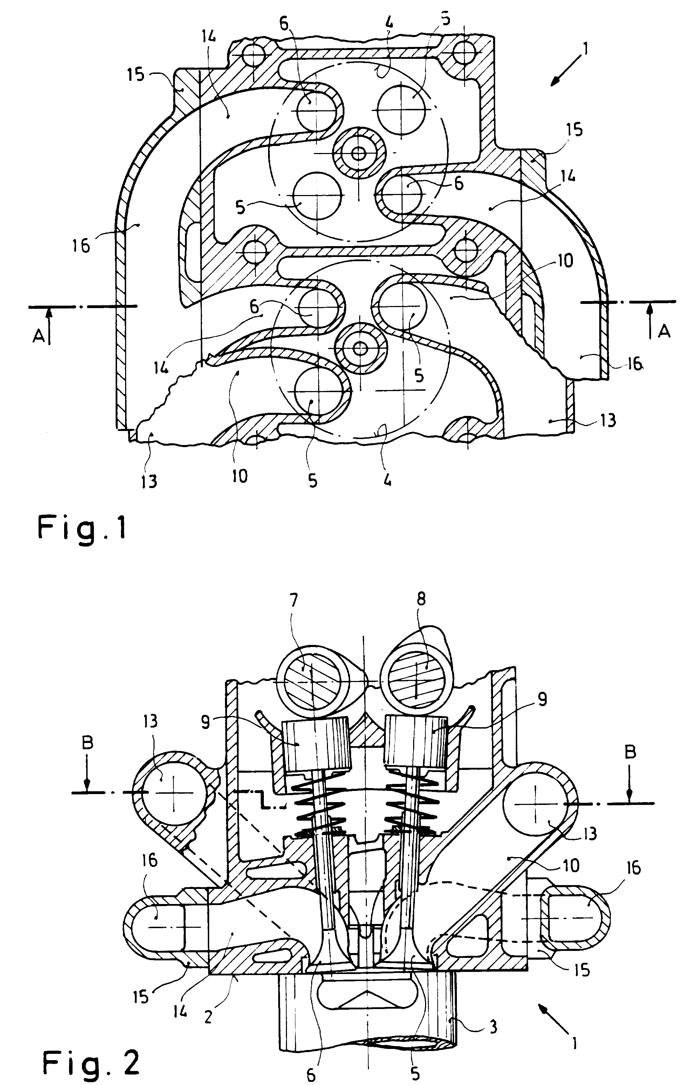

Ein Ausführungsbeispiel der Erfindung ist nachstehend anhand von Zeichnungen näher beschrieben. Es zeigen
- Fig. 1:: einen Zylinderkopf einer Brennkraftmaschine im Schnitt, in Draufsicht, in schematischer Darstellung;
- Fig. 2:: einen Schnitt entlang der Linie A-A in Figur 2;

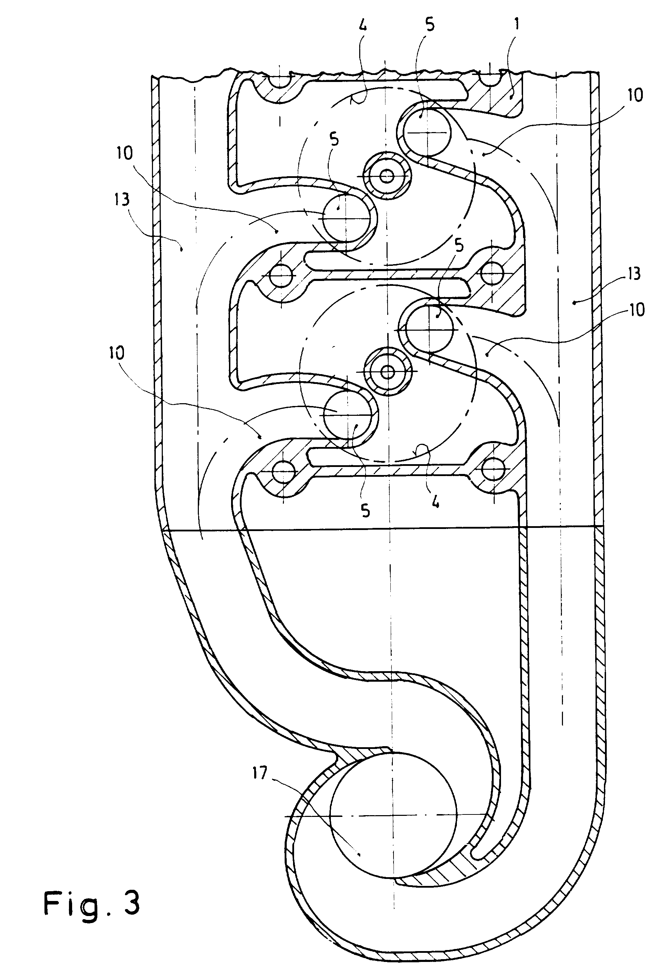

- Fig. 3:: den Zylinderkopf nach Figur 1 und 2 als Schnitt entlang der Linie B-B in Figur 2 mit einem zylinderkopfnahen Turbolader, schematisch dargestellt;
- Fig. 4:: den grundsätzlichen Strömungsverlauf der Luft im Zylinderraum der Brennkraftmaschine während der Ladung in Draufsicht;
- Fig. 5:: die Richtung der einströmenden Luft in den Zylinderraum in Draufsicht.

Ein Zylinderkopf 1 liegt mit seiner Trennebene 2 auf einem nicht dargestellten Zylinderblock auf, in welchem Hubkolben 3 geführt sind. Der Zylinderkopf 1 enthält für jeden der im Zylinderblock befindlichen Zylinder 4, deren Umfangslinien in den Zeichnungen angedeutet sind, zwei Einlaßventile 5 und zwei Auslaßventile 6. Sowohl die Einlaßventile 5 als auch die Auslaßventile 6 liegen sich bezogen auf die Mittenachse des Zylinders 4 gegenüber, so daß - bezogen auf die Mittenachse des Zylinders - jeweils einem Einlaßventil 5 ein Auslaßventil 6 folgt. Einlaßventile 5 und Auslaßventile 6 werden von Nockenwellen 7 und 8 über Tassenstößel 9 in an sich bekannter Weise betätigt.

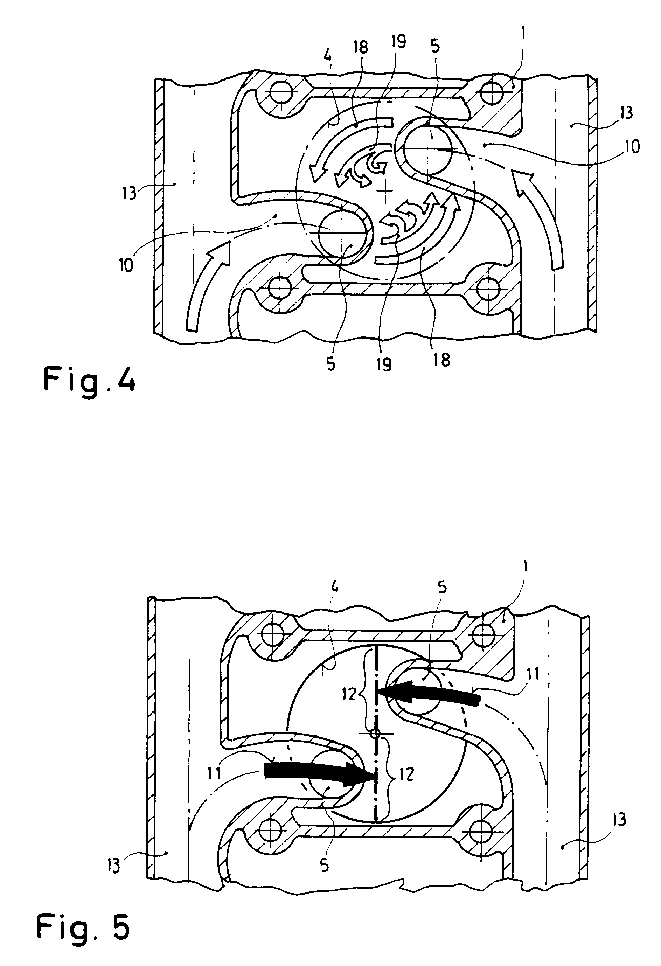

Zu den Einlaßventilen 5 führen als Schrägkanäle 10 ausgeführte Einlaßkanäle, deren Mündungsrichtung, die mit den Pfeilen 11 angedeutet ist, an den Einlaßventilen 5 unter etwa 45° auf eine Ebene senkrecht zur Achse des Zylinders 4 stößt und in Draufsicht senkrecht auf etwa die Mitte eines Radius 12 des Zylinders 4 gerichtet ist (vergleiche Figur 5). Die Schrägkanäle 10 werden von Ansaugkanälen 13 gespeist, die beiderseits des Zylinderkopfes 1 verlaufen und mit diesem einstückig gegossen sind. Dadurch sind gesonderte Einlaßkrümmer nicht erforderlich. Die Auslaßventile 6 stehen mit Auslaßkanälen 14 in Verbindung, die gemeinsam mit dem Zylinderkopf 1 gegossen sind. An diese Auslaßkanäle 14, die beiderseits des Zylinderkopfes 1 austreten, schließt sich jeweils ein in einem Abgaskrümmer 15 befindlicher Abgaskanal 16 an.

Bei einer bevorzugten Bauweise führen die beiden Abgaskanäle 16 zu der Turbine eines unmittelbar an den Zylinderkopf 1 angesetzten Abgasturboladers 17, dessen Druckseite der Ladepumpe auf die Ansaugkanäle 13 arbeitet. Diese Bauweise bietet sich besonders vorteilhaft dann an, wenn die Verbrennungskraftmaschine mit Abgasturboladung ohne Ladeluftkühlung betrieben werden soll. Der Abgasturbolader 17 kann in Folge seiner unmittelbaren Nähe zum Zylinderkopf 1 vorteilhaft an dessen Kühl- und/oder Schmiersystem angeschlossen werden.

Insbesondere bei einer erfindungsgemäßen Brennkraftmaschine, die als Saugmotor ausgebildet ist, kann einer der Ansaugkanäle 13 mittels einer Klappe (auf der Zeichnung nicht dargestellt) absperrbar sein. Damit wird der Einlaß der Luft in den Zylinderraum lediglich durch ein Einlaßventil 5 erfolgen, während das andere zwar geöffnet und geschlossen wird, aber zum Gaswechsel nicht beiträgt und somit praktisch abgeschaltet ist. Trotzdem wird bei der vorgeschlagenen Kanalanordnung ein ausreichender Drall im Zylinderraum erreicht.

Bei einer Verbrennungskraftmaschine nach der Erfindung kann die Luft über zwei Einlaßkanäle 5 ohne Drosselwirkung, wie dies bei Drallkanälen unumgänglich ist, durch die beiden Schrägkanäle 10 in den Zylinderraum einströmen. Da die Einströmöffnungen bezogen auf die Achse des Zylinders um 180° versetzt angeordnet sind, kann sich im Zylinderraum ein intensiver Drall 18 der Ladung ausbilden. Durch die Berührung der beiden Einlaßströme in der Zylindermitte werden zusätzlich aber Wirbel 19 ausgelöst, welche sich dem Drall 18 überlagern (siehe Figur 4). Damit gelingt es, neben einer optimalen Füllung des Zylinderraumes auch gute Voraussetzungen für die optimale Verbrennung des Kraftstoffes zu schaffen.

Infolge der einstückigen Ausführung von Zylinderkopf 1 und Ansaugkanal 13 bleibt der Bauaufwand einer solchen Brennkraftmaschine gering. Wenn einer der Ansaugkanäle 13 mit einer Klappe oder dergleichen zum zeitweiligen Absperren dieses Ansaugkanals versehen wird, dann kann mit einfachsten Mitteln eine Brennkraftmaschine mit zwei Einlaßventilen 5 für jeden Zylinder gebaut werden, von denen eines abschaltbar ist.

Die erfindungsgemäße Brennkraftmaschine ist vorzugsweise mit zwei Auslaßventilen 6 für jeden Zylinder versehen, wobei diese jeweils zwischen den Einlaßventilen 5, bezogen auf den Zylinderumfang, angeordnet sind. Nach der Erfindung ist es jedoch auch möglich, nur ein Auslaßventil 5 für jeden Zylinder vorzusehen.

Durch die einstückige Ausführung des Zylinderkopfes 1 mit den Ansaugkanälen 13 kann bei einer durch Turbolader 17 aufgeladenen Brennkraftmaschine der Turbolader 17 in unmittelbarer Nähe des Zylinderkopfes 1 angeordnet sein. Sein Gehäuse kann z. B. ebenfalls einstückig mit dem Zylinderkopf 1 hergestellt sein. Dies wird sich besonders bei einer Aufladung ohne Ladeluftkühlung anbieten. Sowohl die Kühlung als auch die Schmierung des Turboladers 17 können dann in vorteilhafter Weise an die Kühlung und Schmierung des Zylinderkopfes 1 angeschlossen werden. Eine solche Maßnahme reduziert die Baukosten einer aufgeladenen Brennkraftmaschine erheblich.

## Patentansprüche

1. Brennkraftmaschine mit Hubkolben (3) und innerer Verbrennung, insbesondere Dieselmotor, mit zwei um 180° bezogen auf die Achse des Zylinders versetzten Einlaßventilen (5) je Zylinder (4), deren zugeordnete Einlaßkanäle innerhalb des Zylinderkopfes (1) von jeweils einem von zwei beidseits des Zylinderkopfes angeordneten Ansaugkanälen (13) zu den Ventilöffnungen der die Einlaßkanäle steuernden Einlaßventile (5) führen und mit zumindest einem jeweils zwischen zwei benachbarten Einlaßventilen (5) angeordneten Auslaßventil (6), dadurch gekennzeichnet, daß beide Einlaßkanäle im Verlauf zwischen Ansaugkanal (13) und Ventilöffnung der Einlaßventile (5) als in Projektion auf eine parallel zur Zylindermittenachse liegende Fläche geradlinig verlaufende gleich lange Schrägkanäle (10) ausgeführt sind, die in Projektion auf den Zylinderquerschnitt jeweils mit ihrer Mittellinie senkrecht auf die Mitte von in einer geraden Linie angeordneten Zylinderradien (12) und mit etwa 45° Neigung in Tangentenrichtung auf die Trennebene (2) zwischen Zylinderkopf (1) und Zylinderblock gerichtet sind.

2. Brennkraftmaschine nach Anspruch 1, dadurch gekennzeichnet, daß die Schrägkanäle (10) sowie die vorgelagerten Ansaugkanäle (13) mit dem Zylinderkopf (1) einstückig hergestellt sind.

3. Brennkraftmaschine nach Anspruch 1 und 2, dadurch gekennzeichnet, daß jeweils zwischen zwei Einlaßventilen (5) ein Auslaßventil (6) angeordnet ist.

4. Brennkraftmaschine nach Anspruch 1 bis 3, dadurch gekennzeichnet, daß einer der Ansaugkanäle (13) wahlweise absperrbar ist.

5. Brennkraftmaschine nach Anspruch 1 bis 3, dadurch gekennzeichnet, daß ein Turbolader (17) zylinderkopfnah angeordnet und in das Kühl- und Schmiersystem des Zylinderkopfes integriert ist.

## Claims

1. Internal combustion engine with reciprocating piston (3), in particular diesel engine, with two inlet valves (5) per cylinder (4), which are offset by 180° in relation to the axis of the cylinder and of which the associated inlet ports within the cylinder head (1) lead from in each case one of two intakes (13) which are arranged on both sides of the cylinder head, to the valve openings of the inlet valves (5) controlling the inlet ports, and with at least one exhaust valve (6) arranged in each case between two adjacent inlet valves (5), characterised in that the two inlet ports in their path between intake (13) and valve opening of the inlet valves (5) are designed as inclined channels (10) of equal length extending rectilinearly in projection onto a surface lying parallel to the cylinder centre axis and which, in projection onto the cylinder cross-section, are directed in each case with their centre line perpendicularly to the centre of cylinder radii (12) arranged in a straight line and with an inclination of about 45° in the tangent direction to the dividing plane (2) between cylinder head (1) and cylinder block.

2. Internal combustion engine according to claim 1, characterised in that the inclined channels (10) as well as the intakes (13) mounted in front are manufactured in one piece with the cylinder head (1).

3. Internal combustion engine according to claims 1 and 2, characterised in that between every two inlet valves (5) is arranged an exhaust valve (6).

4. Internal combustion engine according to claims 1 to 3, characterised in that one of the intakes (13) can be shut off selectively.

5. Internal combustion engine according to claims 1 to 3, characterised in that a turbocharger (17) is arranged near the cylinder head and integrated in the cooling and lubricating system of the cylinder head.

## Revendications

1. Moteur à combustion interne à pistons (3) alternatifs, notamment moteur Diesel, comportant dans chaque cylindre (4) deux soupapes d'admission (5) qui sont décalées angulairement de 180° par rapport à l'axe du cylindre et dont les conduits d'admission associés dans la culasse (1) mènent chacun de l'un des deux collecteurs d'admission (13) disposés de chaque côté de la culasse aux orifices d'admission des soupapes d'admission (5) contrôlant les conduits d'admission, ainsi qu'au moins une soupape d'échappement (6) qui est disposée entre deux soupapes d'admission (5) voisines, caractérisé par le fait que les deux conduits d'admission, au niveau de leur tronçon entre le collecteur d'admission (13) et l'orifice d'admission des soupapes d'admission (5), en projection sur une surface parallèle à l'axe médian du cylindre, sont réalisés sous forme de conduits inclinés (10) rectilignes de même longueur dont les axes médians, en projection sur la section du cylindre, sont orientés perpendiculairement à une série de rayons (12) des cylindres disposés sur une droite, à mi-longueur desdits rayons, et avec une inclinaison de 45° environ dans la direction de la tangente au plan de séparation (2) entre la culasse (1) et le bloc cylindre.

2. Moteur à combustion interne selon la revendication 1, caractérisé par le fait que les conduits inclinés (10) ainsi que les collecteurs d'admission (13) situés en amont sont fabriqués d'une pièce avec la culasse (1).

3. Moteur à combustion interne selon les revendications 1 et 2, caractérisé par le fait qu'à chaque fois une soupape d'échappement (6) est disposée entre deux soupapes d'admission (5).

4. Moteur à combustion interne selon les revendications 1 à 3, caractérisé par le fait que l'un des collecteurs d'admission (13) peut être bloqué de manière sélective.

5. Moteur à combustion interne selon les revendications 1 à 3, caractérisé par le fait qu'un turbo-compresseur (17) est disposé à proximité de la culasse et est intégré dans le circuit de refroidissement et de graissage de la culasse.
